Europäisches Patentamt

European Patent Office

Office européen des brevets

(11) Numéro de publication: **0 246 384**
**A1**

# DEMANDE DE BREVET EUROPEEN

(21) Numéro de dépôt: **86401079.8**

(22) Date de dépôt: **22.05.86**

(51) Int. Cl.⁴: **B25J 15/04**

(43) Date de publication de la demande:
**25.11.87 Bulletin 87/48**

(84) Etats contractants désignés:
**BE CH DE GB IT LI NL**

(71) Demandeur: **MANITOU BF**
**Z.I. - Route de Châteaubriant**
**F-44150 Ancenis(FR)**

(72) Inventeur: **Hubaut, Michel**
**Le Bourg.Drapé**
**F-44850 Mouzeil(FR)**

(74) Mandataire: **Loyer, Bertrand et al**
**Cabinet Pierre Loyer 18, rue de Mogador**
**F-75009 Paris(FR)**

(54) **Dispositif de changement d'outils pour bras automatique.**

(57) Dispositif de manutention automatique d'outils comportant un bras manipulateur à axes multiples muni d'une tête mobile monofonction. La tête est munie d'une pièce (10) de préhension passive, sur laquelle vient s'accrocher une pièce (14) portant un outil (34) munie de moyens de préhension actifs (18, 19) , ladite pièce porte-outil (14) s'accrochant à l'ergot de fixation (10) et y demeurant accrochée tant qu'elle n'est pas ramenée à son poste de chargement.

Fig. 2

## Dispositif de changement d'outils pour bras automatique

La présente invention est relative à un dispositif de changement d'outils pour bras automatique.

Il est connu de réaliser des dispositifs de changement d'outils pour machines-outils comportant un bras qui vient saisir l'outil sur la tête de travail de la machine outil, le tient pendant que les moyens de blocage de la broche sont dessérer, puis se déplace pour déposer l'outil dans un magasin, saisir un autre outil et présenter ce dernier devant la broche.

Il est également connu de munir la tête d'un bras mobile d'un robot d'un mécanisme de préhension qui permet au robot de déposer dans un magasin l'outil qu'il vient d'employer et d'aller en saisir un autre. Ces mécanismes fonctionnent de façon satisfaisante, mais sont assez lourds. Dans le cas d'un bras automatique de robot de soudure, la capacité de port en charge d'un tel bras est limitée en environ 5 kg ; un mécanisme de préhension permettant de changer d'outil pesant environ 3 kg, disposer un mécanisme de ce genre sur un tel bras reviendrait à réduire la capacité de charge du bras dans des proportions telles, qu'une telle solution serait inviable et conduirait à prévoir un robot de capacité nettement supérieure.

La présente invention a pour but de tourner cette difficulté et consiste à disposer sur le bras du robot une pièce de préhension passive sur laquelle vient s'accrocher une pièce port-outil, munie de moyens de préhension actifs, qui s'accroche à la pièce de préhension du bras du robot et y demeure accrochée tant qu'elle n'est pas ramenée à un poste de chargement.

Le dispositif selon la présente invention est caractérisé par le fait qu'il comporte : un ergot de fixation porté par la tête mobile située à l'extrémité du bras automatique du robot : un sabot porte-outil comportant des moyens de fixation dudit sabot audit ergot de fixation ; un outil fixé de façon permanente audit sabot ; un poste de chargement pouvant recevoir au moins deux sabots et comportant des moyens pour mettre en action les moyens mécaniques par lequel chaque sabot s'accroche audit ergot.

A titre d'exemple non limitatif et pour faciliter la compréhension de l'invention, on a représenté au dessins annexés :

Figure 1, une vue schématique représentant un bras automatique de robot ;

Figure 2, une vue en élévation latérale en coupe partielle illustrant un mode de réalisation de l'invention ;

Figure 3, une vue de détail, de face, de l'ergot du dispositif de la figure 2 ;

Figure 4, une vue de détail en élévation latérale de la figure 3 ;

Figure 5, une vue en élévation latérale du sabot porte-outil sur son poste de chargement ;

Figure 6, une vue en plan de la figure 4 ;

Figure 7, une vue à échelle réduite d'un poste de chargement pour quatre sabots porte-outil.

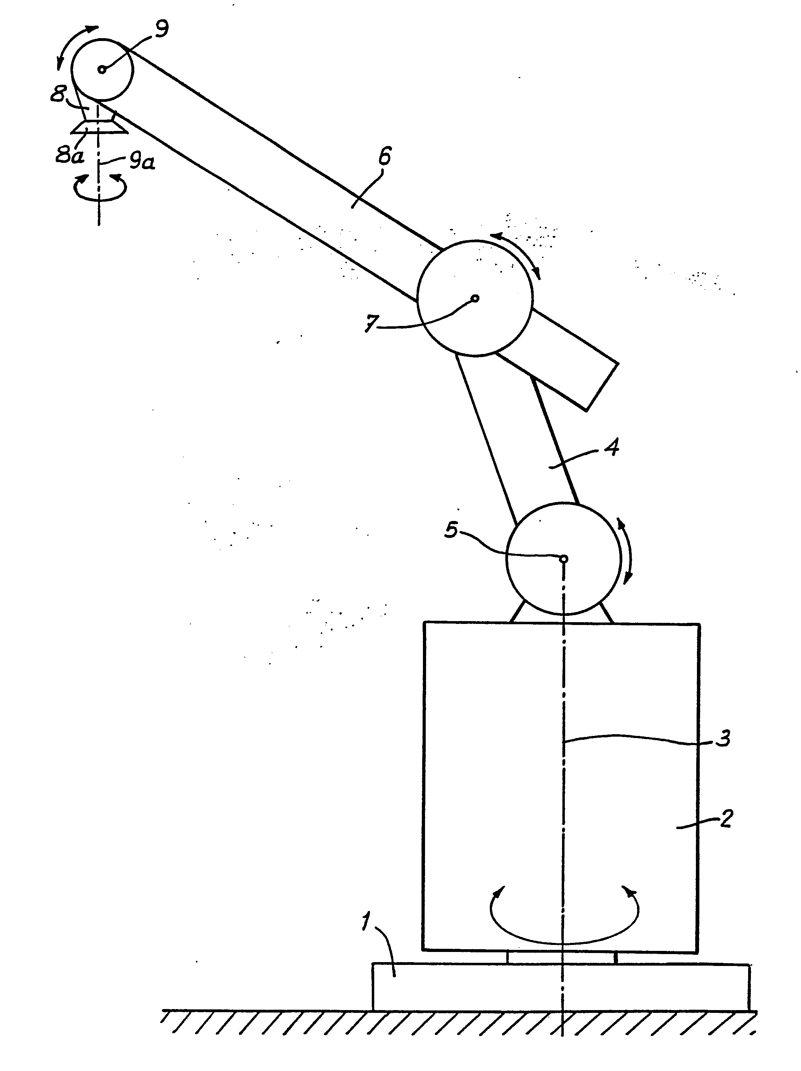

La figure 1 représente, de façon schématique, un robot du type dit à cinq axes de rotation comportant un socle 1, un châssis 2, monté à rotation sur le socle autour d'un axe de rotation 3 ; un bras intermédiaire 4, monté à rotation sur le châssis 2 autour d'un axe de rotation 5 ; un bras manipulateur 6 monté à rotation sur le bras intermédiaire 4 autour d'un axe de rotation 7 ; une tête 8, montée à rotation à l'extrémité du bras manipulateur 6 autour d'un axe 9; ladite tête 8 comportant à sa base une bride 8a pouvant pivoter autour d'un axe 9a porté par ladite tête 8.

Un tel dispositif est connu et est couramment employé pour réaliser automatiquement des soudures, la torche de soudure étant portée par la bride 8a.

Ce dispositif connu que l'on appelle un robot ne peut porter qu'un seul outil et ne peut donc réaliser qu'un seul type d'opération : des soudures par exemple.

Si l'on veut employer un tel robot pour effectuer des taches diverses, il faut qu'il puisse changer d'outil. On pourrait au lieu de la bride 8a, adapter à la tête 8 un mécanisme de préhension actif comportant des pinces articulées, commandées électriquement, pneumatiquement ou hydrauliquement. L'inconvénient est qu'un tel mécanisme est assez lourd et nécessite une source d'énergie. Dans le cas d'un robot soudeur, la charge maximum qu'l'on peut fixer à la tête 8 est de l'ordre de 5 kg de sorte que la mise en place d'un mécanisme automatique de préhension risque de diminuer considérablement et de manière prohibitive la charge utile maximum que le bras 6 peut manipuler.

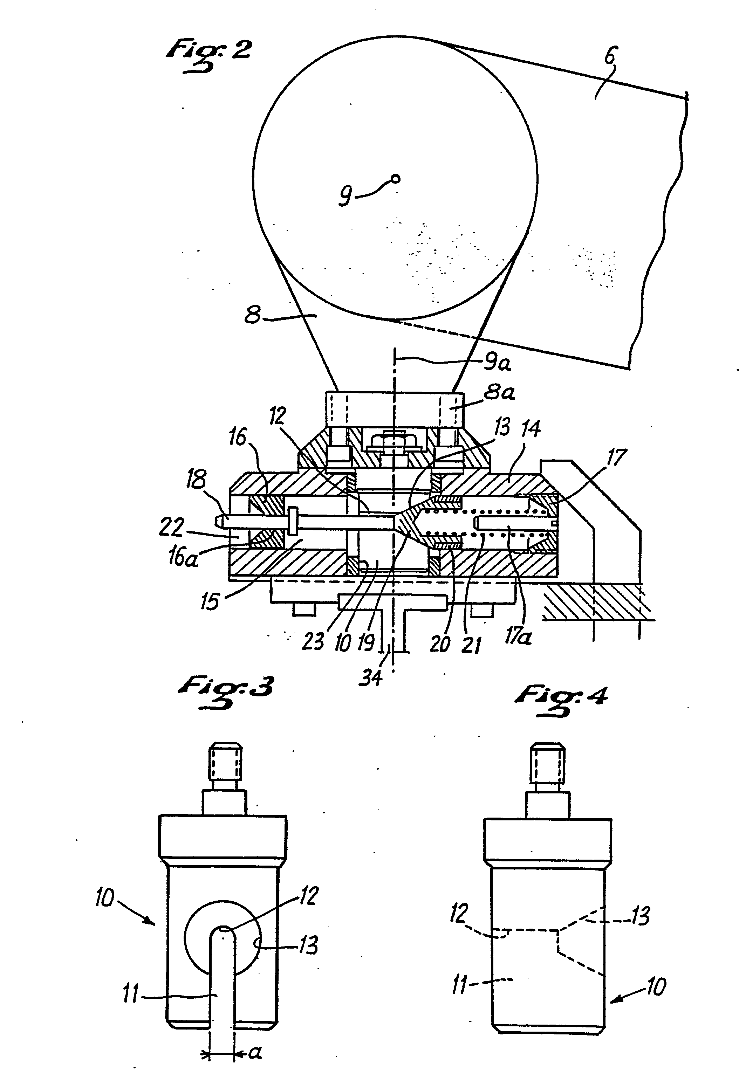

En se reportant aux figures 2 à 4, on voit que, selon l'invention, on fixe à la bride 8a un ergot cylindrique 10, dont l'axe coïncide avec l'axe 9a. Cet ergot cylindrique est coupé selon un plan axial par une fente 11 s'étendant sur pratiquement sa moitié inférieure (figure 3) ; cette fente 11 a une largeur "a" et se termine d'un côté par un demi-cercle 12 de diamètre égal à "a". Sur son autre côté, cette fente débouche dans un perçage conique 13, coaxial au demi cercle 12 (figures 3 et 4).

Sur la figure 2, on voit que le sabot 14 comporte un alésage axial 15, fermé par deux bouchons 16 et 17. Le bouchon 17 porte une tige coaxiale de guidage 17a et le bouchon 16 est traversé par un alésage coaxial 16a. Dans l'alésage 16a coulisse une tige 18, qui, au moyen d'un cône 19 est reliée à une pièce cylindrique 20, contretenue par un ressort 21, enfilé sur la tige-guide 17a. Le diamètre de la tige 18 est pratiquement égale et en fait légèrement inférieur à la largeur "a" de la fente 11 ; le cône 19 a le même angle au sommet que le cône 13 ; le cylindre 20 coulisse dans l'alésage 15. Le bouchon 16 est situé à une certaine distance de l'extrémité de l'alésage 15, ce qui ménage une chambre 22 ; la tige 18 fait saillie au-delà du bouchon 16 dans la chambre 22.

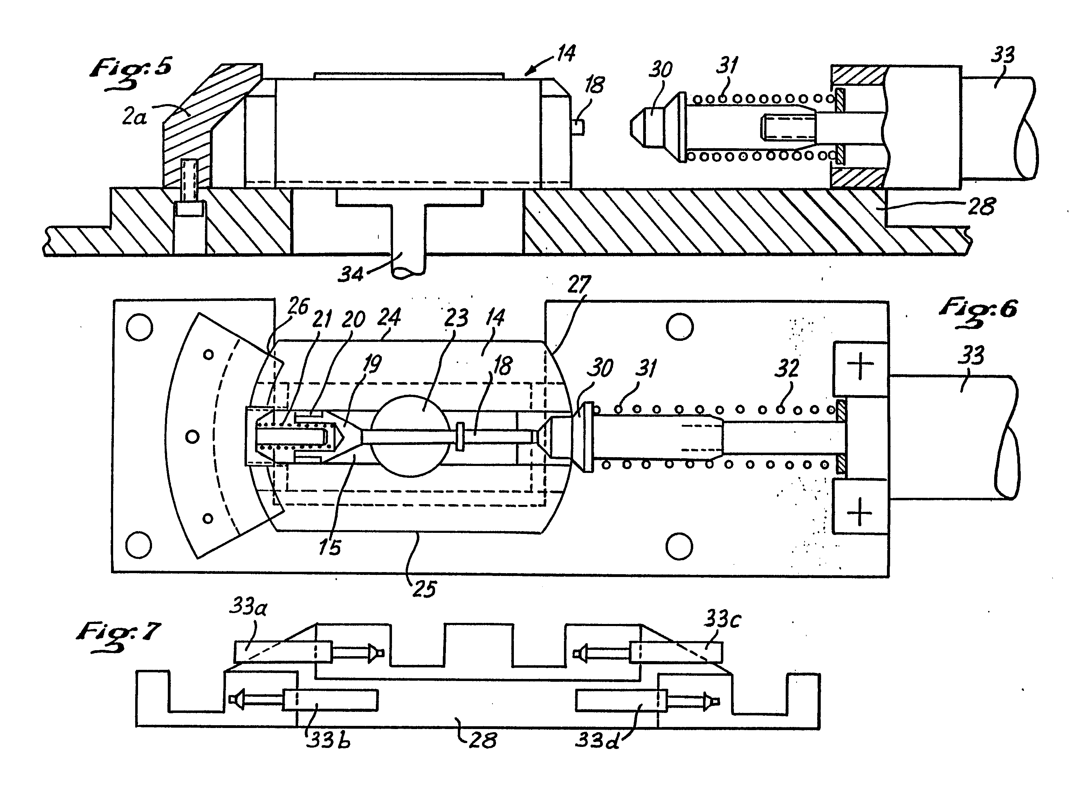

En se reportant à la figure 5, on voit que le sabot 14 comporte un orifice central 23 ayant même diamètre (très légèrement supérieur) que l'ergo 10. Le sabot 14 comporte deux parois latérales planes et parallèles 24 et 25 et deux parois semi-circulaires 26 et 27, symétriques et centrées sur le centre de l'orifice 23.

Les figures 5 et 6 représentent le sabot 14 à son poste de chargement, tandis que la figure 2 le représente accroché à l'ergot 10. Sur ces figures 5 et 6, on voit que le poste de chargement comporte un plateau 28 sur lequel est fixée une butée semi-circulaire 29 dont le profil est en forme de bec. La courbure de la butée semi-circulaire 29 a même rayon que les parois 26 et 27 du sabot 14. Lorsque le sabot 14 est en appui contre la butée 29 l'extrémité de la tige 18 fait face à un poussoir 30, relié à un ressort de rappel 31 et solidaire d'un piston 32 coulissant dans un cylindre 33. Lorsque le cylindre 33 est mis sous pression (figure 6), le piston 32 se déplace à l'encontre du ressort de rappel 31 et le poussoir 30 vient pousser l'extrémité de la tige 18, ce qui fait coulisser le cylindre 20 dans l'alésage 15 en comprimant le ressort 21 jusqu'à ce que le cône soit entièrement hors de l'orifice central cylindrique 23 du sabot 14, cet orifice n'étant plus alors traversé que par la tige 18. Lorsque le cylindre 33 n'est plus en pression, le ressort 31 ramène le poussoir 30 dans la position représentée à la figure 5 et le ressort 21 repousse le cylindre 20 de sorte que le cône 19 revient dans l'orifice 23.

La tige 18 et le cône 19 constituent le moyen mécanique par lequel le sabot 14 s'accroche à l'ergot 10 et y est verrouillé.

Le sabot 14 porte fixé à sa paroi inférieure, un outil 34, qui peut être quelconque et n'est donc représenté que de façon schématique.

Le fonctionnement du dispositif ainsi décrit est le suivant. Le bras 6 du robot présente l'ergot 10 de la tête mobile 8 de façon que l'axe 9a coïncide exactement avec l'axe de l'orifice cylindrique 23.

Le bras 6 abaisse la tête 8 tout en la faisant pivoter autour de l'axe 9 de façon que l'axe 8a demeure en coïncidence avec l'axe de l'orifice 23 (les moyens par lesquels ce mouvement est obtenu ne sont pas décrits parce qu'ils sont propres au robot qui est de type connu). Juste avant que l'ergot pénètre dans l'orifice cylindrique 23, le piston 32 est actionné de sorte que le cône 2 s'efface ; la fente 11 de l'ergot 10 vient alors chevaucher la tige 18 jusqu'à ce que la tige 18 vienne pratiquement contre l'extrémité 12 de ladite fente 11. Le mouvement de descente de l'ergot 10 est arrêté. Le piston 32 est alors relâché et le cône 19 vient s'engager dans l'orifice conique correspondant 13 de l'ergot 10. Le sabot 14 est alors verrouillé sur l'ergot 10, la pénétration du cône 19 dans l'orifice 13 assurant un indexage précis de la position du sabot 14. Un outil 34 est alors fixé à la tête 8 du bras 6 avec une position angulaire précise. Le verrouillage du sabot 14 sur l'ergot 10 est assuré par le ressort 21 sans nécessiter aucune action particulière du robot lui-même.

Pour changer d'outil, le bras 6 du robot ramène le sabot à son poste de chargement et une fois le sabot en place, un signal actionne le piston 32 et le poussoir 30 fait sortir le cône 19 de l'orifice conique 13 ; le bras 6 soulève alors la tête 8 et l'ergot 10 se dégage de l'orifice 23 ; ceci fait, le piston 32 peut revenir en position de repos.

Le bras 6 peut alors présenter l'ergot 10 au-dessus d'un autre sabot 14, portant un autre outil 34, disposé à un autre poste de chargement.

Il n'est pas nécessaire que les postes de chargement soient groupés en une même zone : ils peuvent être désséminés tout autour du robot, à la seule condition évidemment d'être à la portée du bras 6.

Mais on peut également les grouper en une seule zone comme cela est représenté schématiquement à la figure 7. En se reportant à cette figure, on voit que le support 28 porte quatre postes de chargement et donc quatre cylindres 33 (33a, 33b, 33c, 33d). Pour des raisons d'encombrement, ces cylindres sont inversés et dans ce cas, il faut programmer le robot pour qu'il fasse effectuer à l'ergot 10 une rotation de 180° autour de l'axe 9a pour aller d'un poste à l'autre, suivant le cas.

Le dispositif ainsi décrit permet donc, sans ajouter aucun mécanisme à un bras automatique existant monofonction, de rendre ce bras multifonctionnel. Ce dispositif pourra avoir des fonctions pratiquement illimitées puisqu'il pourra avoir autant de fonction qu'il y aura de sabots 14 et d'outils 34, ce qui serait pratiquement impossible à réaliser en disposant des moyens actifs de préhension sur la tête 8.

Dans l'exemple représenté, le moyen mécanique par lequel le sabot 14 s'accroche à l'ergot 10 est constitué par une tige 18 munie d'un verrou conique 19 venant s'encastrer dans une fente 11 munie d'une ouverture conique 13, mais il est évident que l'invention n'est pas limitée à ce mode de réalisation particulière, qui peut être remplacé par tout moyen mécanique d'accrochage avec indexage équivalent.

Dans l'exemple représenté, la pièce de préhension passive montée à l'extrémité de la tête 8 du robot est un ergot 10 comportant un évidement conique dans lequel vient s'emboîter un cône 19 porté par une tige mobile 18. Il est bien évident que l'invention n'est pas limitée à ce mode particulier de réalisation du verrouillage et que toute autre forme de verrou peut être employé.

D'autre part, il est également évident que le vérin 33 peut être pneumatique, hydraulique ou électrique.

## Revendications

1. Dispositif de manutention automatique d'outils comportant un bras manipulateur à axes multiples muni d'une tête mobile monofonction susceptible d'être équipée d'une pluralité d'outils disposés sur un poste de chargement, caractérisé par le fait que ladite tête mobile monofonction (8) est munie d'une pièce de préhension (10) qui est passive et ne comporte aucun mécanisme actif de préhension ; tandis que chaque pièce porte-outil (14) portant un outil (34) est munie d'un mécanisme de préhension actif (18-19) destiné à coopérer avec ladite pièce passive (10), ce mécanisme de préhension actif (18-19) étant actionné par des moyens de commande (33-32) disposés sur le poste de chargement des pièces porte-outils (14) indépendamment de la tête (8) du bras manipulateur (6); de telle sorte que la fixation et le détachement de la pièce porte-outil (14) sur la pièce passive (10) de la tête (8) soient réalisés par des moyens actifs propres à ladite pièce (14) actionnée par des moyens de commande propres au poste de chargement, sans intervention d'un mécanisme propre au bras manipulateur.

2. Dispositif de manutention selon la revendication 1, caractérisé par le fait qu'il peut comporter autant de fonctions différentes qu'il y a de pièces porte-outil (14), chaque pièce (14) portant un outil (34) différent.

3. Dispositif selon la revendication 1 ou 2, caractérisé par le fait que la tête mobile (8) du bras manipulateur (6) d'un robot, comporte un ergot cylindrique (10) qui vient s'engager dans un orifice cylindrique correspondant (23) d'un sabot (14) portant un outil (34) ledit sabot étant muni de moyens de verrouillage de l'ergot dans son orifice cylindrique (23) et ces moyens étant maintenus en position verrouillée par un ressort (21) et mis en position de déverrouillage par un mécanisme (30, 32) situé sur le poste de chargement du sabot (14).

4. Dispositif selon la revendication 3, dans lequel l'ergot cylindrique (10) est fendu selon un plan axial par une fente (11) d'une certaine largeur (a), cette fente communiquant sur un de ses côtés avec un orifice conique (13) ; ladite fente (11) et son orifice (13) venant coopérer avec un tige (18) de même diamètre (a) que la largeur (a) de la fente (11) et un cône (19), porté par ladite tige (18) ayant même angle au sommet que l'orifice conique (13), la tige (18) et le cône (19) étant portés par le sabot (14) et traversant l'orifice central (23) de celui-ci.

5. Dispositif selon la revendication 4, dans lequel le poste de chargement de chaque sabot (14) comporte un moyen hydraulique électrique ou pneumatique pour actionner le mécanisme de déverrouillage du sabot (14).

6. Dispositif selon la revendication 5, dans lequel ce mécanisme est un poussoir (30) venant repousser la tige (18) et son cône (19) à l'encontre du ressort (21).

7. Dispositif selon l'une quelconque des revendications 1 à 6, caractérisé par le fait qu'il comporte une pluralité de postes de chargement de sabots (14) répartis tout autour du robot, à la portée du bras manipulateur (6).

8. Dispositif selon l'une quelconque des revendications 1 à 6, caractérisé par le fait qu'il comporte des postes de chargement groupés en une seule zone.

9. Dispositif selon la revendication 8, dans lequel les postes de chargement comportent des moyens de déverrouillage angulairement décalés les uns par rapport aux autres, le robot étant alors programmé pour faire pivoter l'ergot (10) autour de son axe (8a) de l'angle correspondant.

0 246 384

*Fig. 2*

6

9

8

9a

8a

12

16

13 14

18

17

22

16a

15

23 10 19

20 21

17a

34

*Fig. 3*

*Fig. 4*

10

12

13

11

a

12

13

11

10

Fig:5

2a  14  18  30  31  33

34  28

Fig:6

26 21 20 24  23  14  27  33
19  18  30  31  32

15
25

0 246 384

Fig:7

33a  33c

33b  28  33d

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 400 527 (MASING-KIRKHOF GmbH) <br> * Page 6, ligne 10 - page 7, ligne 27; page 12, ligne 24 - page 13, ligne 11 * | 1-3,7, 8 | B 25 J 15/04 |
| X | IBM TECHNICAL DISCLOSURE BULLETIN, vol. 27, no. 12, mai 1985, pages 7124-7125, New York, US: "Interchangeable robot gripper tool system" <br> * En entier * | 1-3 | |
| A | IDEM | 4,5 | |
| E | FR-A-2 581 338 (MANITOU) <br> * En entier * | 1-9 | **DOMAINES TECHNIQUES RECHERCHES (Int. Cl.4)** |
| Y | GB-A-2 143 800 (CINCINNATI MILACRON INDUSTRIES INC.) <br> * Page 2, lignes 58-62,69-117 * | 1,2,7, 8 | B 25 J |
| Y | GB-A-2 130 550 (CLEVELAND-GUEST LTD) <br> * Résumé * | 1,2 | |
| A | | 4-6 | |
| | --- -/- | | |

Le présent rapport de recherche a été établi pour toutes les revendications

| Lieu de la recherche <br> LA HAYE | Date d'achèvement de la recherche <br> 16-01-1987 | Examinateur <br> LAMMINEUR P.C.G. |
|---|---|---|

# RAPPORT DE RECHERCHE EUROPEENNE

**Office européen des brevets**

Numéro de la demande

EP 86 40 1079

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-1 278 858 (PYE LTD)<br><br>* Page 2, colonne 2, lignes 48-56 * | 1,2,7,8 | |
| Y | US-A-4 281 447 (MILLER et al.)<br>* Colonne 2, ligne 66 - colonne 3, ligne 49 * | 1,2 | |
| A | EP-A-0 092 967 (FANUC LTD)<br>* Page 2, ligne 26 - page 3, ligne 14 * | 1-3 | |
| A | FR-A-2 411 061 (REGIE NATIONALE DES USINES RENAULT)<br>* Revendications 1,3 * | 1 | |
| A | FR-A-1 181 485 (COMMISSARIAT A L'ENERGIE ATOMIQUE) | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 16-01-1987 | LAMMINEUR P.C.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82